# EUROPÄISCHE PATENTSCHRIFT

(11) **EP 0 635 385 B1**
(45) Veröffentlichungstag und Bekanntmachung des Hinweises auf die Patenterteilung: **23.10.1996**
(21) Anmeldenummer: 94108927.8
(22) Anmeldetag: 10.06.1994
(51) Int. Cl.: B60H 1/00

(54) **Heizungs-/Klima-Anlage in einem Kraftfahrzeug**
Heating and air conditioning installation in a motor car
Dispositif de chauffage et de climatisation sur véhicule à moteur

(30) Priorität: 22.07.1993 AT 1459/93
(43) Veröffentlichungstag der Anmeldung: 25.01.1995
(73) Patentinhaber: STEYR NUTZFAHRZEUGE AG, A-4400 Steyr (AT)
(72) Erfinder: Gaishauser, Helmut, A-5020 Salzburg (AT); Schönegger-Fösleitner, Erich, A-4400 Steyr (AT); Koch, Erich, D-85757 Karlsfeld (DE); Watzek, Gerhard, D-80935 München (DE)

(56) Entgegenhaltungen:
- DE-A- 1 605 896
- DE-A- 2 117 893
- DE-B- 1 530 966
- FR-A- 2 548 980

## Beschreibung

Die Erfindung betrifft eine Heizungs-/Klima-Anlage in einem Kraftfahrzeug, insbesondere Lastkraftwagen, die hinter/unter dem Armaturenbrett angeordnet und deren mit ihr verbundenes Bedienteil in eine Öffnung hineinragt, die im Armaturenbrett bzw.einem als Abdeckung für die Anlage dienenden Teil desselben gegeben ist.

Heizungs-/Klima-Anlagen für Kraftfahrzeuge werden in der Regel von Unterlieferanten hergestellt und als komplett vormontierte Einheit angeliefert. Dabei ist das Bedienteil lagefest fixierter Bestandteil der Heizungs-/Klima-Anlage. Außerdem sind die zur Übertragung der Hebel- und Luftklappenbetätigung erforderlichen Elemente, wie Bowdenzüge, bereits in die Null-Stellung einjustiert. Bei der Montage wird die komplett vormontierte Heizungs-/Klima-Anlage in die Rohkarosserie des Fahrzeuges eingesetzt, dann die luftführenden Teile montiert sowie Wasser-, Kältemittel-, Elektro-Leitungen verlegt. Anschließend wird das Armaturenbrett oder ein als Abdeckung für die Heizungs-/Klima-Anlage dienendes Armaturenbrett-Teil über die vormontierte Heizungs-/Klima-Anlage gestülpt und an der Fahrzeug-Rohkarosserie befestigt. Dabei taucht das an der Heizungs-/Klima-Anlage starr befestigte Bedienteil in eine entsprechende Öffnung der Armaturenbrett-Verkleidung von hinten her ein, wird dann mit der Armaturenbrett-Verkleidung verschraubt und gegebenenfalls mit einer Frontblende abgedeckt, so daß auf der dem Fahrgastraum zugewandten Seite des Armaturenbrettes eine flächig geschlossene Einheit entsteht.

Diesen bekannten Heizungs-/Klima-Anlagen mit fest angebautem Bedienteil haften folgende Nachteile an. In der Regel sind für den Einbau einer Heizungs-/Klima-Anlage in das Fahrzeug relativ große Toleranzen in Quer-und Längsrichtung als auch eine begrenzte Verdrehung der Anlage um deren Hochachse zugelassen, um die Handhabung beim Einbau nicht unnötig zu erschweren. Insbesondere im Falle von Nutzfahrzeugen, wie Lastkraftwagen, können diese Einbautoleranzen mehrere Millimeter betragen. Nach diesem solchermaßen toleranzbehafteten Einbau der Heizungs-/Klima-Anlage in das Kraftfahrzeug ergibt sich dann das Problem, daß wegen des starr befestigten Bedienteils entweder auch das Armaturenbrett bzw. das Armaturenbrett-Teil hinsichtlich seiner Einbaulage entsprechend toleranzbehaftet sein muß oder aber die Öffnung, in welche das Bedienteil eintaucht, entsprechend groß bemessen sein muß. Insbesondere in letzterem Fall kann sich dann ein optisch ungünstiger Zustand ergeben, nämlich daß ein rings um das Bedienteil in der Öffnung verbleibender Spalt ungleichmäßig ist.

Es ist daher Aufgabe der Erfindung, die Heizung-/Klima-Anlage und das Armaturenbrett bzw. dessen als Abdeckung für die Anlage fungierendes Teil so auszubilden, daß unabhängig von den vorgegebenen Herstellungs- und Einbautoleranzen und unterschiedlichen Einbaulagen diese Fahrzeugteile problemlos schnell und einfach so montierbar sind, daß immer eine exakt definierte Zuordnung zwischen Bedienteil der Heizungs-/Klima-Anlage und Armaturenbrett bzw. dessen als Abdeckung fungierendem Teil herbeiführbar ist.

Diese Aufgabe ist erfindungsgemäß dadurch gelöst, daß das Bedienteil durch spezielle Federelemente mit Abstand an der Heizungs-/Klima-Anlage in drei Ebenen schwimmend begrenzt beweglich gelagert ist, derart, daß es sich unabhängig von der toleranzbehafteten Einbaulage der Heizungs-/Klima-Anlage bei Montage des Armaturenbrettes bzw. dessen als Abdeckung fungierendem Teil selbst in der dort vorgegebenen Öffnung exakt zugeordnet lagefixiert.

Vorteilhafte Ausgestaltungen dieser Lösung sind in den Unteransprüchen gekennzeichnet. Dabei kann die armaturenbrettseitge Öffnung eine solche Form und Größe haben, daß das Bedienteil mit geringem Spiel praktisch randfrei hineinpaßt. In diesem Fall kann das Bedienteil durch eine Frontblende ergänzbar sein, die von vorne her an ihm lagefixiert ansetzbar ist.

Alternativ hierzu kann dann, wenn zwischen Bedienteil und der querschnittsgrößeren, armaturenbrettseitgen Öffnung ein umlaufender Spalt gleichmäßiger Distanz bleiben soll, das Bedienteil ortsfest an ihm gegebene Fixierungsorgane aufweisen, die bei Montage des Armaturenbrettes bzw. dessen als Abdeckung fungierendem Teil mit an diesem entsprechend gegebenen Fixierungsorganen in Eingriff bringbar sind. Die Fixierungsorgane können dabei am einen Bauteil durch vorspringende, zumindest teilweise konische Fixierungszapfen und die Fixierungsorgane am anderen Bauteil können durch Bohrungen gebildet sein, in welche die Fixierungszapfen eintauchen. In diesem Fall kann das Bedienteil durch eine Frontblende ergänzbar sein, die von vorne her in die armaturenbrettseitge Öffnung, dort in den Spalt um das Bedienteil einsetzbar ist und ihre Lagefixierung über das Bedienteil erhält.

Das Bedienteil ist über die Federelemente in Anbaulage des Armaturenbrettes bzw. dessen als Abdeckung dienendem Teil vorzugsweise unter Vorspannung gegen dessen Innenseite gedrückt und mittels Schrauben von dessen Vorderseite her an diesem befestigt. In bevorzugter Ausgestaltung weist das Bedienteil einen in Querschnitt rechteckigen Sockel auf, an dessen beiden Längsseiten jeweils in entsprechenden Vorkehrungen durch Einklipsen eine etwa U-förmige Bügelfeder lagefixiert befestigt ist, deren beide U-Schenkel jeweils den Boden des Bediengerätes mit gleicher, etwa dessen Höhe entsprechenden Länge überragen, im freien Abschnitt etwa Wellenform haben und mit ihrem freien Ende an der Heizungs-/Klima-Anlage befestigt sind.

Aufgrund der erfindungsgemäßen schwimmenden Anordnung des Bediengerätes an der Heizungs-/Klima-Anlage ergeben sich eine Reihe von Vorteilen. So erlaubt die erfindungsgemäße Lösung sowohl bei der Heizungs-/Klima-Anlage als auch dem Armaturenbrett bzw. dem als Abdeckung für die Heizungs-/Klima-Anlage dienenden Armaturenbrett-Teil größere Fertigungstoleranzen als bisher, so daß sich die Herstellung dieser besagten Fahrzeug-Teile vereinfacht. Andrerseits ermöglicht die erfindungsgemäße Lösung, daß beim Einbau der Heizungs-/Klima-Anlage in das Fahrzeug nicht mehr in dem Maße wie bisher auf deren exakten maßhaltigen Einbau geachtet werden muß. Entsprechendes gilt gleichermaßen auch für das Armaturenbrett bzw. dessen als Abdeckung fungierendes Teil. Letztendlich bedeutet dies, daß Toleranzausgleiche in funktions- und optisch-unbedeutende Bereiche verlegt sind und die Passgenauigkeit von Armaturenbrett bzw. als Abdeckung dienenden Teil und Heizungs-/Klima-Anlage qualitativ und herstellungsprozeßsicher optimiert ist. Von besonderem Vorteil ist es, daß die Heizungs-/Klima-Anlage inklusive Bedienteil mit Regel- und Verstellorganen sowie von diesen ausgehenden Klappen- oder Hebelbetätigungselementen wie Bowdenzügen komplett z.B. bei einem Unterlieferanten montiert sowie hinsichtlich der Funktionen einjustiert werden kann und vor, während und nach dem Einbau der Anlage ins Fahrzeug keinerlei Nachjustagemaßnahmen erforderlich sind.

Nachstehend ist die erfindungsgemäße Lösung anhand eines in der Zeichnung dargestellten Ausführungsbeispieles noch näher erläutert. In der Zeichnung zeigen:

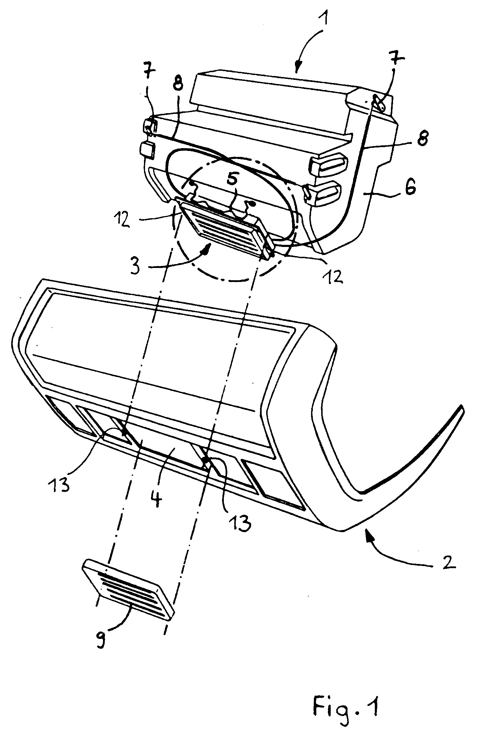

- Fig. 1: eine Heizungs-/Klima-Anlage eines Kraftfahrzeuges und ein als Abdeckung für diese dienendes Armaturenbrett-Teil in Explosionsdarstellung,und

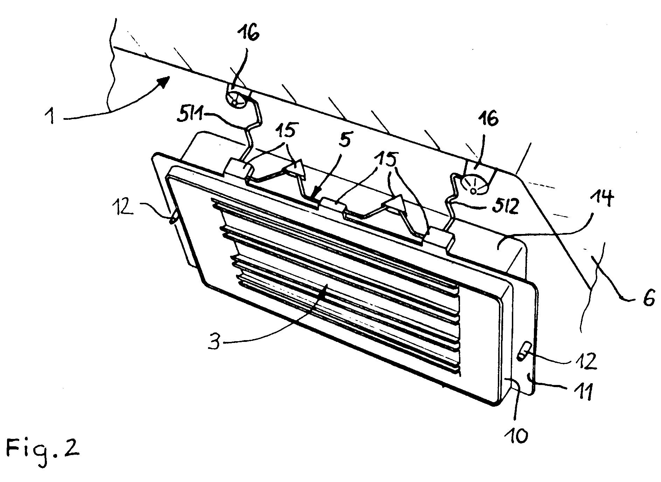

- Fig. 2: einen vergrößerten Ausschnitt aus Fig. 1, der dort durch einen strichpunktierten Kreis markiert ist.

In der Zeichnung ist mit 1 die Heizungs/Klima-Anlage eines Kraftfahrzeuges, hier eines Lastkraftwagen, und mit 2 ein zur Abdeckung der Anlage 1 dienendes Teil eines hier mehrteiligen Armaturenbrettes bezeichnet. Die Heizungs-/Klima-Anlage 1 ist hinter bzw. unter dem Armaturenbrett, abgedeckt durch dieses, im Fahrzeug angeordnet. Deren mit ihr verbundenes Bedienteil 3 ragt von hinten her in eine Öffnung 4 hinein, die im Armaturenbrett bzw. dessen als Abdeckung für die Anlage 1 dienenden Teil 2 gegeben ist.

Entsprechend der Lehre der Erfindung ist das Bedienteil 3 durch spezielle Federelemente 5 mit Abstand an der Heizungs-/Klima-Anlage 1 in drei Ebenen schwimmend begrenzt beweglich gelagert, derart, daß es sich unabhänig von der toleranzbehafteten Einbaulage der Heizungs-/Klima-Anlage 1 im Fahrzeug bei Montage des Armaturenbrettes bzw. dessen Teils 2 selbst in der dort vorgegebenen Öffnung 4 exakt zugeordnet lagefixiert.

Im dargestellten Beispiel ist das Bediente 3 frontseitig am Gehäuse 6 der Heizungs-/Klima-Anlage 1 befestigt und bildet mit letzterer eine komplett vormontierte Baueinheit, die als solches in das Fahrzeug einbaubar ist. Dabei sind an dieser komplett vormontierten Baueinheit die von den Regel- bzw. Verstellorganen des Bedienteils 3 ausgehenden, für eine Übertragung der zur Betätigung von Klappen und/oder Hebeln 7 erforderlichen Elemente 8, beispielsweise Bowdenzüge, ebenfalls bereits am Gehäuse 6 der Heizungs/Klima-Anlage 1 vormontiert und in die erforderliche Null-Stellung einjustiert. Über die solchermaßen als Baueinheit in das Fahrzeug bereits eingebaute Heizungs-/Klima-Anlage wird dann das Armaturenbrett bzw. dessen Teil 2 montiert. Bei dessen Ansetzen fädelt sich das an der Heizungs-/Klima-Anlage 1 schwimmend gelagerte Bedienteil 3 in die Öffnung 4 ein, wobei die Toleranzen zwischen fahrzeugseitig bereits montierter Heizungs-/Klima-Anlage 1 und Armaturenbrett bzw. Teil 2 in allen drei Richtungen großzügig ausgleichbar sind. Die Öffnung 4 im Armaturenbrett bzw. dessen Teil 2 kann dabei eine solche Form und Größe haben, daß das Bedienteil 3 mit geringem Spiel praktisch randfrei hineinpaßt. In diesem Fall kann das Bedienteil 3 durch eine Frontblende 9 ergänzt werden, die von vorne her angesetzt sich lagemäßig dann an diesem fixiert. Im dargestellten Beispiel ist hiervon abweichend eine andere Lösung gewählt. Dabei ist vorgesehen, daß zwischen dem vorderen Rand 10 des Bedienteils 3 und der Öffnung 4 im Armaturenbrett bzw. dessen Teil 2 ein umlaufender Spalt gleichmäßiger Distanz verbleiben soll. Hierzu ist die Öffnung 4 gegenüber dem Querschnitt der Umrandung 10 des Bedienteiles 3 entsprechend querschnittsgrößer ausgebildet. Außerdem sind am Bedienteil 3, dort an einer Anlageplatte 11, ortsfest Fixierungsorgane 12 vorgesehen, die bei Montage des Armaturenbrettes bzw. dessen Teils 2 mit an diesem entsprechend gegebenen Fixierungsorganen 13 in Eingriff bringbar sind. Im dargestellten Beispiel sind die bedienteilseitigen Fixierungsorgane 12 durch axial vorspringende, zumindest teilweise konische Fixierungszapfen und die armaturenbrettseitigen Fixierungsorgane 13 durch Bohrungen gebildet, in welche die Fixierungszapfen eintauchen können und dann dort mit geringem Spiel fixiert sind. Alternativ hierzu ist die Lage der Fixierungszapfen und Bohrungen-auch zwischen den Bauteilen 3 und 2 vertauschbar. Unabhängig von seiner Ausgestaltung und Fixierung innerhalb bzw. durch die Öffnung 4 ist das Bedienteil 3 über die Federelemente 5 in Anbaulage des Armaturenbrettes bzw. dessen Teils 2 vorzugsweise unter Vorspannung mit seiner Anlageplatte 11 von hinten her gegen dessen Innenseite gedrückt und mittels nicht dargestellter Schrauben von dessen Vorderseite her daran befestigt. Im dargestellten Beispiel ist das Bedienteil 3 durch eine Frontblende 9 ergänzbar, die von vorne her in die Öffnung 4, dort in den Spalt um das Bedienteil 3, einsetzbar ist und ihre Lagefixierung über das vorfixierte Bedienteil 3 erhält.

Für die Ausgestaltung der Federelemente 5 und deren Anschluß am Gehäuse 6 der Heizungs-/Klima-Anlage 1 sowie dem Bedienteil 3 gibt es verschiedene Ausführungsmöglichkeiten. So ist es denkbar, mehrere, beispielsweise vier Spiralfedern vorzusehen, die im jeweiligen Eckbereich des rechteckigen Sockels 14 des Bedienteils 3 einerseits und andrerseits am Gehäuse 6 der Heizungs-/Klima-Anlage 1 befestigt sind. Im dargestellten Beispiel sind als Federelemente 5 zwei Bügelfedern vorgesehen, die an den beiden Längsseiten des rechteckigen Sockels 14 am Bedienteil 3 in entsprechenden Vorkehrungen 15 lagefixiert befestigt, insbesondere eingeklipst sind. Jede dieser beiden Bügelfedern 5 überragt mit ihren beiden U-Schenkeln 5/1, 5/2 jeweils den Boden des Bediengerätes 3 mit gleicher, etwa der Höhe des letzteren entsprechender Länge. Diese beiden U-Schenkel 5/1, 5/2 haben in ihrem freien, die Beweglichkeit des Bedienteils 3 bestimmenden Teil etwa Wellenform und sind mit ihrem freien Ende am Gehäuse 6 der Heizungs-/Klima-Anlage 1, dort an entsprechenden Vorsprüngen 16, befestigt.

Unabhängig von ihrer konkreten Ausgestaltung und Anordnung garantieren die Federelemente 5 grundsätzlich die für den Ausgleich der Fertigungs- und Einbautoleranzen notwendige Beweglichkeit des Bedienteils 3 in allen Richtungen.

## Patentansprüche

1. Heizungs-/Klima-Anlage (1) in einem Kraftfahrzeug, insbesondere Lastkraftwagen, die hinter bzw. unter dem Armaturenbrett angeordnet ist und deren mit ihr verbundenes Bedienteil (3) in eine Öffnung (4) hineinragt, die im Armaturenbrett bzw. einem als Abdeckung für die Anlage (1) dienenden Teil (2) desselben gegeben ist, dadurch gekennzeichnet, daß das Bedienteil (3) durch mehrere Federelemente (5) in drei Ebenen begrenzt beweglich schwimmend und mit Abstand an der Heizungs-/Klima-Anlage (1) gelagert ist, derart, daß es sich - unabhängig von der toleranzbehafteten Einbaulage der Heizungs-/Klima-Anlage (1) im Fahrzeug - bei Montage des Armaturenbrettes bzw. eines Teils (2) desselben, selbst in der dort vorgegebenen Öffnung (4) exakt zugeordnet lagefixiert, wobei die Federelemente (5) einerseits am Bedienteil (3), andrerseits an der Heizungs-/Klima-Anlage (1) befestigt sind und mit ihrem jeweils zwischen diesen Einspannstellen freien Teil die Beweglichkeit des Bedienteils (3) nach allen Richtungen sowie dessen Montage-Abstand zur Heizungs-/Klima-Anlage sicherstellen.

2. Heizungs-/Klima-Anlage nach Anspruch 1, dadurch gekennzeichnet, daß die Öffnung (4) im Armaturenbrett bzw.in dessen Teil (2) eine solche Form und Größe hat, daß das Bedienteil (3) mit geringem Spiel praktisch randfrei hineinpaßt.

3. Heizungs-/Klima-Anlage nach Anspruch 2, dadurch gekennzeichnet, daß das Bedienteil (3) durch eine Frontblende (9) ergänzbar ist, die von vorne her an ihm lagefixiert ansetzbar ist.

4. Heizungs-/Klima-Anlage nach Anspruch 1, dadurch gekennzeichnet, daß dann, wenn zwischen Bedienteil (3) und der querschnittsgrößeren Öffnung (4) im Armaturenbrett bzw. dessen Teil (2) ein umlaufender Spalt gleichmäßiger Distanz bleiben soll, das Bedienteil (3) ortsfest an ihm gegebene Fixierungsorgane (12) aufweist, die bei Montage des Armaturenbrettes bzw. dessen Teils (2) mit an diesem entsprechend gegebenen Fixierungsorganen (13) in Eingriff bringbar sind.

5. Heizungs-/Klima-Anlage nach Anspruch 4, dadurch gekennzeichnet, daß die Fixierungsorgane (12) an einem Bauteil bzw. durch vorspringende, zumindest teilweise konische Fixierungszapfen und die Fixierungsorgane (13) am anderen Bauteil durch Bohrungen gebildet sind, in welche die Fixierungszapfen eintauchen können.

6. Heizungs-/Klima-Anlage nach Anspruch 4, dadurch gekennzeichnet, daß das Bedienteil (3) durch eine Frontblende (9) ergänzbar ist, die von vorne her in die Öffnung (4) des Armaturenbrettes bzw. dessen Teil (2), dort in den verbleibenden Spalt um das Bedienteil (3) eintauchend, einsetzbar ist und ihre Lagefixierung über das Bedienteil (3) erhält.

7. Heizungs-/Klima-Anlage nach einem der vorhergehenden Ansprüche, dadurch gekennzeichnet, daß das Bedienteil (3) über die Federelemente (5) in Anbaulage des Armaturenbrettes bzw. dessen Teil (2) unter Vorspannung gegen dessen Innenseite gedrückt und mittels Schrauben von dessen Vorderseite her daran befestigt ist.

8. Heizungs-/Klima-Anlage nach Anspruch 1, dadurch gekennzeichnet, daß das Bedienteil (3) einen im Querschnitt rechteckigen Sockel (14) hat, an dessen beiden Längsseiten jeweils in entsprechenden Vorkehrungen (15) durch Einklipsen eine etwa U-förmige Bügelfeder (5; 5/1, 5/2) lagefixiert befestigt ist, deren beide U-Schenkel (5/1, 5/2) jeweils den Boden des Bediengerätes (3) mit gleicher, etwa dessen Höhe entsprechenden Länge überragen, im freien, die Beweglichkeit des Bedienteiles (3) bestimmenden Teil etwa Wellenform haben und mit ihrem freien Ende an der Heizungs-/Klima-Anlage (1) befestigt sind.

## Claims

1. Heating/air-conditioning system (1) in a motor vehicle, particularly in a truck, which system (1) is located behind or under the instrument panel and whose operating element (3) connected with said system (1) protrudes into an orifice (4) provided in said instrument panel or in a portion (2) of it, which portion (2) serves as a cover for said system (1), characterised in that the operating element (3) is mounted in three planes by several spring elements (5) in a restrictedly movable and floating manner on and at a distance from the heating/air-conditioning system (1) in such a way that, irrespective of the tolerance-affected installation position of the heating/air-conditioning system (1) in the vehicle, said operating element (3) during assembly of the instrument panel or a of portion (2) of it, fixes itself exactly in the orifice (4) provided there, the spring elements (5) being attached, on the one hand, to said operating element (3) and, on the other hand, to the heating/air-conditioning system (1) and ensuring the operating element's (3) movability in all directions with that part between these clamping points which is free and also maintaining the distance between operating element (3) and heating/air-conditioning system (1) during assembly.

2. Heating/air-conditioning system according to Claim 1, characterised in that the orifice (4) in the instrument panel or in the respective portion (2) of it has such a shape and size that the operating element (3) fits into it with little play and leaves virtually no edge.

3. Heating/air-conditioning system according to Claim 2, characterised in that a front panel (9) can be added to the operating element (3) which panel (9) can be attached to said operating element (3) from the front and fixed in position.

4. Heating/air-conditioning system according to Claim 1, characterised in that, if a circumferential gap at an equal distance is to be maintained between the operating element (3) and the orifice in the instrument panel or in the respective portion (2) of it, which orifice has a larger cross section, the operating element (3) is equipped with positioning organs (12) which are firmly attached to said operating element (3) and which during assembly of the instrument panel or the respective portion of it (2) can be engaged with positioning organs (13) provided on said instrument panel/respective portion.

5. Heating/air-conditioning system according to Claim 4, characterised in that the positioning organs (12) on the one component are designed as protruding, at least partially conical positioning pins and that the positioning organs (13) on the other component are designed as bores, into which the positioning pins can penetrate.

6. Heating/air-conditioning system according to Claim 4, characterised in that a front panel (9) can be added to the operating element (3) which panel (9) can be inserted from the front into the orifice (4) in the instrument panel or in the respective portion (2) of it, in which orifice said front panel (9) dips into the remaining gap around the operating element (3) and is fixed in position via the operating element (3).

7. Heating/air-conditioning system according to one of the foregoing Claims, characterised in that the operating element (3) is, under initial tension, pressed against the inside of the instrument panel or the respective portion (2) of it via spring elements (5) attached to the instrument panel or the respective portion (2) of it when the latter is in attached position and is fastened to it from the outside of said instrument panel or said respective portion (2) of it by means of screws.

8. Heating/air-conditioning system according to Claim 1, characterised in that the operating element (3) has a base (14) with a rectangular cross section, to the two long sides of which base an approximately U-shaped bow spring (5; 5/1, 5/2) can be fixed in position by clipping it into place in suitable provisions (15), the two legs of the U (5/1, (5/2) of which bow extend beyond the bottom of the operating element (3) by identical length which roughly equals the height of said operating element (3) and in the free part which determines the movability of the operating element (3) have an undulating form and are at their free end attached to the heating/air-conditioning system (1).

## Revendications

1. Installation de chauffage/climatisation de véhicule automobile, notamment de véhicule utilitaire, montée derrière et/ou sous la planche de bord et dont la pièce de commande (3), qui lui est reliée est engagée dans une ouverture (4) pratiquée dans le tableau de bord ou une pièce (2) de celui-ci servant de couverture à l'installation (1),
caractérisée en ce que
la pièce de commande (3) est montée flottante sur l'installation (1) et à une certaine distance de celle-ci, par l'intermédiaire de plusieurs éléments élastiques (5), avec mobilité limitée dans trois plans, de manière qu'indépendamment des tolérances concernant la position de montage de l'installation de chauffage/climatisation (1) dans le véhicule, lorsqu'on effectue le montage de la planche de bord ou de la pièce (2) de celle-ci, la pièce de commande (3) est exactement positionnée par rapport à l'ouverture (4) déjà en place, les éléments élastiques (5) étant fixés d'un côté à la pièce de commande (3) et de l'autre à l'installation (1) et assurant, par leurs parties libres entre leurs points de montage, la mobilité de la pièce (3) dans toutes les directions ainsi que son espacement au montage par rapport à l'installation de chauffage/climatisation.

2. Installation de chauffage/climatisation selon la revendication 1,
caractérisée en ce que
l'ouverture (4) pratiquée dans la planche de bord ou sa partie (2) a une forme et des dimensions telles que la pièce de manoeuvre (3) s'y loge avec un jeu réduit, pratiquement sans bords.

3. Installation de chauffage/climatisation selon la revendication 2,
caractérisée en ce que
la pièce de commande (3) peut être complétée par un masque frontal (9) qui peut être monté et fixé par l'avant sur celle-ci.

4. Installation de chauffage/climatisation selon la revendication 1,
caractérisée en ce que
dans le cas où il faut maintenir, entre la pièce de commande (3) et l'ouverture (4) de plus large section, pratiquée dans la planche de bord ou sa pièce (2), une fente périphérique de largeur constante, la pièce de commande (3) porte, en position fixe, des organes de fixation (12) qui peuvent, lors du montage de la planche de bord ou de sa partie (2) venir en prise avec des organes de fixation (3) correspondants montés sur celle-ci.

5. Installation de chauffage/climatisation selon la revendication 4,
caractérisée en ce que
les organes de fixation (12) portés par un composant sont des tétons en saillie comportant au moins une partie conique tandis que les organes de fixation (13) portés par l'autre composant sont des perçages dans lesquels viennent se loger les tétons.

6. Installation de chauffage/climatisation selon la revendication 4,
caractérisée en ce que
la pièce de commande (3) peut être complétée par un masque frontal (9) qui peut être monté par l'avant dans l'ouverture (4) de la planche de bord ou de sa partie (2) avec engagement dans la fente subsistant autour de la pièce de commande, la fixité de sa position étant assurée par la pièce de commande (3).

7. Installation de chauffage/climatisation selon l'une des revendications précédentes,
caractérisée en ce que
la pièce de commande (3), lorsque la planche de bord ou sa partie (2) est montée, est appliquée sous tension contre la face interne de celle-ci, par l'action des éléments élastiques (5) et fixée à la planche par des vis introduites par l'avant.

8. Installation de chauffage/climatisation selon la revendication 1,
caractérisée en ce que
la pièce de commande (3) comporte un socle (14) de section rectangulaire sur chacun des deux longs côtés duquel est fixé dans des portées correspondantes (15), par clipsage, un étrier élastique (5; 5/1, 5/2) en forme de U dont les branches (5/1, 5/2) dépassent chacune le fond de la pièce (3) d'une même longueur, correspondant sensiblement à la hauteur de la pièce, cette partie libre qui assure la mobilité de la pièce (3) présentant une forme ondulée et étant fixée par son extrémité à l'installation de chauffage/climatisation (1).
